# EUROPEAN PATENT APPLICATION

(11) **EP 1 695 940 A1**
(43) Date of publication of application: **30.08.2006**
(21) Application number: 05101459.5
(22) Date of filing: 25.02.2005
(51) Int. Cl.: C02F 1/78, C02F 1/00, C02F 9/00, C02F 1/28, C02F 101/14

(54) **A device and a method for purifying a liquid with ozone and recirculation**

(71) Applicant: HomeFlow Switzerland Distribution SA, 6300 Zug (CH)
(72) Inventor: Tanny, Gerald, 76310, Rehovot (IL); Frenkel, Hella, 44480, Kfar-Saba (IL); Cohen, Avraham, 95956, Jerusalem (IL)
(74) Representative: Hepp, Dieter

(57) **Abstract**

In a device (1) for purifying a liquid (W1) the liquid is first treated with ozone in an ozonation unit (8). Pollutants such as arsenic components thereby are oxidised. In a subsequent step, oxidised pollutants are removed from the ozone treated water in a filtration unit (58).

## Description

The invention relates to a device and to a method for purifying water according to the preamble of the independent patent claims.

In many parts of the world, drinking water sources contain microbiological contaminants such as cysts, bacteria, and viruses, in addition to concentrations of inorganic chemical species such as ferrous iron, manganese, hydrogen sulphide, arsenic and fluoride that represent either long term health dangers or aesthetic issues.

Thus, a need exists for a simple point of use, automatic device that is capable of efficiently treating the water to the potable water standards set by the USEPA, and which is appropriate for use by a private individual or office.

Point of use chemical sanitation of drinking water is well known. Ozone is a preferred chemical as it may be easily generated in-situ, does not form potentially toxic halogenated byproducts (THM's), and reverts to molecular oxygen within a short time.

US 5 683 576 describes an ozone-based water treatment apparatus suitable for residential point of use and point of entry. This comprises a pre-treatment filter, a batch ozone reactor (CT chamber), an ozone generator, storage tanks and a micro-controller.

US 6 475 352 B2 describes a household water purifier utilizing ozone injected into a re-circulating system containing a pre-filter, a main activated carbon filter, water treatment reactor and optionally, a polishing activated carbon filter for filtering the water just prior to dispense. The operation of the system is through a micro-controller and a pump with a system of valves, and the water must be circulated a minimum of 3-8 times through the main filter and reactor in order to achieve an appropriate level of microbiological treatment. While this apparatus will remove colloidal particulates (either present initially or generated by the ozonation process) and organic chemical contaminants, it does not provide an answer to the reduction or removal of inorganic ions such as arsenic or fluoride that may be present at concentrations which present a long term health threat.

Removal of arsenic is complicated by the fact that it may be present in either the As(III+), arsenite ion, or in the As(V+) arsenate ion form. The As(III+) has a very low degree of adsorption on active media in the pH6-8,5 range allowable for drinking water, and its removal is thus problematic.

Wang et al. (L. Wang, A. Chen, and K. Fields, EPA/600/R-00/088, October 2000) demonstrated that although the As(V+) from is efficiently removed in the pH range of 6.5-7.0 by very large ion exchange or activated alumina columns, As(III+) is hardly removed. Thus, activated alumina alone cannot be used to achieve the 10ppb level in drinking water in locations containing more than 15 ppb of As(III+). In such situations, the water is first passed through a column of manganese greensand to oxidise the As(III+) to As (V+) .

In addition, because of the slow adsorption kinetics, even for removal of As(V+), the physical size of the filter required to meet the EPA demand of less than 10ppb in the product water may be too large to be suitable for a residential or point of use application.

Activated alumina is also recommended technology for reduction of fluoride in drinking water (Fluoride Fact Sheet, U.S. Dept. of the Interior, Bureau of Reclamation, Technical Service Center, Water Treatment Engineering and Research Group, D-8230, POB 25007, Denver, CO, 80225, Revision Date 9/21/01. Thus, activated alumina may be used for both As(V+) and fluoride removal.

US 6 368 510 describes a method and apparatus for removing arsenic from the water at a point of entry or point of use particularly for residential application. The technique utilizes a manganese greensand oxidiser cartridge to convert the arsenite As(III+) to As(V+) arsenate followed by removal of the arsenate As(V+) with a reverse osmosis system. This system requires additional controls, reservoirs, permanganate solution, and dosing equipment to periodically regenerate the greensand to continue its oxidising function. All these known solutions have certain drawbacks.

US 6 461 535 describes a process for removing arsenic from ground water by contacting a clay, a coagulant and an oxidiser to form a coagulated colloidal mixture, adsorbing the arsenic onto the colloidal mixture and separating the water from the colloidal mixture. Chlorine or hypochlorite compounds are specifically mentioned as oxidizers.

It is therefore an object of the present invention, to overcome the drawbacks of the prior art, especially to provide a device and a method for purifying liquid that allows for efficient removal of inorganic ions such as arsenic or fluorides. The device and method should be capable to treat water in accordance with proposed EPA test protocol standards under the US Federal insecticide, fungicide and rodenticide act. The present invention further should allow for the use of relatively small filtration units and should be suitable for home use and point of use applications.

According to the present invention, these and other objects are solved with a device and with a method according to the independent patent claims.

The device for purifying a liquid is especially suitable for purifying water. The device comprises at least an ozonation unit. In addition, the device is provided with at least one filtration unit. The filtration unit is adapted for removal of pollutants selected from the group of arsenic components, fluorides, and heavy metal ions The ozonation unit is arranged upstream of the filtration unit between an inlet for the untreated liquid and an outlet for the treated liquid. The inventors of the present invention have found that removal of pollutants such as arsenic components is highly improved if the liquid to be purified is first treated with ozone and then fed through a filtration unit adapted for removal of those pollutants. Because of the treatment of the water with ozone, pollutants such as arsenic components will be converted from the arsenite (AsIII+) form which is difficult to be removed to the As(V+) arsenate form which is more easily removed. In addition, because of ozonation, biological contaminants such as cysts, bacteria or viruses will be destroyed. According to the present invention, by ozonation not only are the microbiological components treated but lower valence inorganic metal ions, such as ferrous and manganous are converted to a higher valence form where they are more easily removed by a subsequent filtration step.

The filtration unit is preferably a filter having an active media in the pH-range allowable for drinking water, typically in the pH-range of 6 to 8,5. The filtration unit is preferably designed so as to remove at least 80% of As(V+) or the fluoride in one single pass at a constant flow rate. According to a preferred embodiment, the filtration unit is an activated alumina filter.

According to a further preferred embodiment of the invention, the device may be provided with a storage reservoir arranged downstream of such filtration unit for storing the treated liquid. It is especially preferred to have re-circulation means in the device for preferably continuously re-circulating a portion of the treated liquid from the container through the filtration unit and back to the reservoir. Such a re-circulation allows for several passages of the liquid through the filtration unit. Therefore, a smaller and less efficient filter which is dimensionally suitable for a point of use applications can be used to create drinking water of the appropriate standard, especially drinking water acceptable under the above mentioned EPA standards.

The device may further be provided with a pre-filtration device arranged upstream of the filtration unit between the ozonation unit and the filtration unit. This pre-filtration device may be preferably an activated carbon block microporous filter. The activated carbon filter is used to remove colloidal oxides or dissolved organic molecules as well as low concentrations of bromate ion that may have been formed from bromide ions present during ozonation.

The ozonation unit may be designed for batch-wise ozonation of a certain quantity of liquid. Especially in combination with a storage reservoir, this allows for the processes of ozonation treatment and dispensing of water to be operated independently . Raw water can be ozone treated until the storage reservoir is completely filled, even if no purified water is dispensed.

According to another preferred embodiment of the invention, the device is provided with means for ozonating the liquid in the storage reservoir and/or in a re-circulation line. Ozonation in the storage reservoir is especially preferable in view of re-growth of biological contaminants during longer periods of non use of the device. Especially the combination of ozonation in the storage reservoir and re-circulation of the liquid through the filtration unit for removal of inorganic ions has advantages. The same ozone generator may be used for generation of ozone for the ozonation unit and for generation of ozone for treatment in the storage reservoir.

The device may be further provided with a pump for feeding the liquid from the ozonation unit to the storage container through the filtration unit. This transfer of liquid is preferably made at a constant flow rate as it has been found that filtration efficiency can be further enhanced by feeding the liquid at a constant flow rate that is optimal for the specific filter and media design.

The pump may further be hydraulically connected to the storage reservoir with valve means in such a way that in a first operating mode the pump is adapted to feed liquid from the ozonation unit through the filter and into the storage reservoir. In a second operating mode, the pump is adapted to re-circulate the liquid from the storage reservoir, through the filtration unit and back to the storage reservoir. In a third operating mode, the pump is adapted to feed purified liquid from the storage reservoir to a dispensing outlet.

According to another aspect of the invention, a method for purifying a liquid, in particular water is provided. In a first step, the liquid is ozonated in an ozonation unit. Thereby, pollutants selected from the group of arsenic components present in the liquid are oxidised. In a subsequent step, the ozone treated liquid is moved through at least one filtration unit adapted for removal of said oxidised pollutants.

According to a preferred embodiment of the present invention, the purified liquid is re-circulated from a storage reservoir through the filtration unit and back to the storage reservoir. Re-circulation can be made a certain number of times or for a period of time sufficient to reduce the amount of pollutants below a pre-determined level.

It is also possible to re-circulate the liquid periodically from time to time, e.g. if no or a too little quantity of purified water has been dispensed for a pre-determined period of time.

It is further possible to feed the ozone treated liquid through a pre-filtration device, preferably through an activated carbon filter before it is transferred through the filtration unit. The present invention is especially preferred in the context with batchwise ozone treatment without being limited thereto.

According to a further preferred embodiment of the invention, it is possible to additionally treat the liquid with ozone in the storage reservoir. This is especially helpful in view of prevention of re-growth of biological contaminants during periods of non use.

It is further preferred to feed the liquid through the filtration unit at a constant flow rate. According to a further preferred embodiment, in a first operating mode, the liquid is moved from the ozonation unit to the storage reservoir by a pump. In a second operating mode, liquid is re-circulated through the filtration unit by this pump. In a third operation mode, liquid is dispensed by this pump.

According to a further preferred embodiment, during re-circulation, a liquid containing dissolved ozone is moved through the filtration unit and/or other parts of re-circulation means.

According to another aspect of the invention, an ozonation device is used for oxidising pollutants in a liquid to be purified prior to removal of the oxidised pollutants by a filtration unit.

Reference will now be made to the drawings which illustrate, by way of example only, a preferred embodiment of the present invention:
- Figure 1: is a diagrammatic illustration of the principle of the present invention,
- Figure 2: is a schematic representation of a device according to the present invention and
- Figures 3a to 3e: different operating modes of the patent invention.

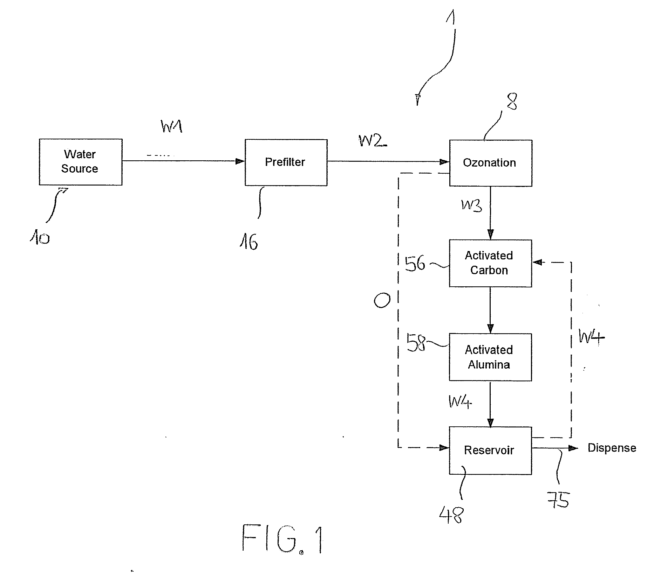

Figure 1 schematically shows the elements of a device 1 for purifying water according to the invention.

Raw water W1 is provided by a water source 10. Particulates and colloidal inorganic matter in the non-potable source water W1 are first pre-filtered by a pre-filter 16. The pre-filter 16 comprises a layer of nominal 1µm microfiberglass followed by an activated carbon block to substantially remove any dissolved or colloidal organic material. Apart from aesthetically treating the water W1 to remove turbidity, by reducing the concentration of organic material present, less ozone will be required in the next stage.

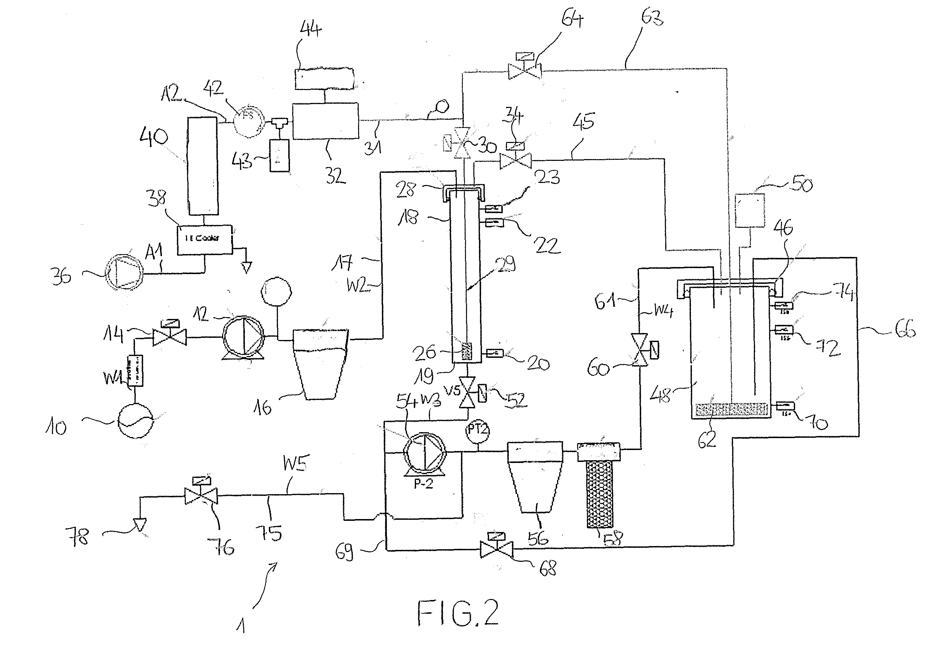

This pre-treated water W2 is led into an ozonation treatment unit arrangement 8 comprised of an ozone generator 32 and an ozonation reaction chamber 18 (see Figure 2) to microbiologically sanitize the pre-treated water in the ozonation unit 8. As(III+) arsenite is simultaneously oxidised to the As(V+) arsenate form. The ozonation is carried out batch-wise for some fixed period depending on the production capacity of the ozone generator, the estimated ozone demand, and the ct (Concentration x Time) required to cause a desired reduction of amount of pollutants. The reduction required to meet the EPA definition of a water purifier is a 4 log reduction of cysts & viruses, and 7 log reduction of bacteria. Any excess ferrous or manganous ion in the water will also be oxidized to the ferric or manganic state, which, in the range of pH of drinking water, precipitate to form colloidal hydrous oxide particles.

The ozonated, pre-treated water W3 is then pumped at a constant flow rate from the ozonation unit 8 through a second set of microfiberglass and activated carbon block filters 56 that remove any colloidal oxides, and dissolved organic molecules, as well as any bromate ion which may have formed from bromide ions present. This is followed by an activated alumina cartridge 58 that has been designed to remove at least 80% of the As(V+) or the fluoride in the first pass through the filter at the above mentioned constant flow rate.

The purified water W4 is then stored in a purified water storage reservoir 48. The reservoir typically may have a volume for 40 litres of purified water.

The purified water storage reservoir 48 and the hydraulic lines for dispense of pure water may be maintained in a near sterile condition by periodically bubbling ozone 03 into the reservoir 48 for short periods of time and re-circulating water W4 from the storage reservoir 48 through the microfiberglass and activated carbon filters 56 and the activated alumina column 58, and back to the storage reservoir 48.

The re-circulation flow rate is set depending on the efficiency of the activated alumina column 58, and the estimated number of passes required to reduce the concentration of either the As(V+) or the fluoride ion in the storage reservoir 48 to a concentration allowable by the USEPA standards. For example, the maximum concentration of arsenic compounds is rarely more than 300ppb, and the USEPA required level is less than 10ppb. Assume further that at a re-circulation rate of 1 liter/min, a given activated alumina filter 58 shows an 80% reduction efficiency for As(V+), and that the complete content of the storage reservoir 48 is 40 liters. Under such circumstances, the contents of reservoir 48 must pass three times through the activated alumina filter 58 or for 120 minutes.

Bubbling ozone can be made periodically if no water is dispensed for a certain period of time. Both the time of bubbling, and the interval between bubbling depend on the original biological load of W3, the concentration of microorganisms considered acceptable, the volume of storage vessel 48 and the ozone generation rate of the ozone treatment unit 8. e.g. In a case with water W3 with a bacterial load of greater than 1000 cfu/ml, a desired steady-state concentration of less than 5 cfu/ 100ml, an ozone generation rate of 600mg/hr and a storage volume of 40 liters, ozonation of the water W4 in the storage reservoir 48 is carried out for 8 minutes at intervals of 2 hours.

Re-circulation may also be carried out initially until the required pollutant concentration is achieved, or later on in order to prevent microbiological re-growth in the hydraulic system such as in the carbon and activated alumina filters, in piping, valves or in the storage reservoir 48.

An apparatus suitable for carrying out the above-mentioned method is shown schematically in Figure 2, except for the micro controller and accompanying electronic circuits that control the operation of the various elements. In the description that follows it is to be understood that the microcontroller, by means of appropriate software, is in control of the operation of the various elements.

The untreated water source, shown at 10, is connected to a constant flow rate pump 12 which is hydraulically connected in series to a solenoid valve 14 and prefilter cartridge 16. Prefilter 16 consists of an activated carbon block filter, with a nominal pore size of 0.5 micron (KX Industries, USA), wrapped with microfiberglass filter material of nominal 1 micron pore size. This filter is provided either within a disposable plastic housing or as a replaceable filter element within a standard filter housing (Ametek, USA). The feed rate of pump 12 is typically 2 liters per minute.

Prefilter 16 is hydraulically connected through a raw water pipe 17 to an ozonation reaction chamber 18, through a lid 28. Ozonation reaction chamber 18 contains a minimum water level switch 20, which activates pump 12 and opens valve 14 whenever the water level is below the switch height. Prefiltered water W2 then enters ozonation reaction chamber 18 until it rises to operate a maximum level switch 22, and/or overflow switch 23, which turn off the pump 12 and close the valve 14.

At the bottom 19 of ozonation reaction chamber 18 there are means 26 for introducing an ozone/air mixture in the form of fine bubbles. This may be a porous ceramic stone or other means as known in the art. Bubbling means 26 is connected through an ozonation pipe 29 to ozonation solenoid valve 30. The ozonation pipe 29 is integrally sealed in passing through lid 28. An ozone delivery pipe 31 hydraulically connects ozonation valve 30 to an ozone generator 32. After activation of the maximum level switch 22, ozonation valve 30 is opened, ozone generator 32 is activated and an ozone/air mixture bubbles through means 26 for a pre-determined period, typically 5 - 15 minutes for a volume of the ozonation reaction chamber 18 of 20 - 40 liters, and an ozone generation rate of 600 mg/hr in an air stream of 2 liters per minute. A transfer solenoid valve 34, connected to lid 28, is simultaneously opened to allow excess air and ozone to exit from ozonation reaction chamber 18.

Excess air and ozone from ozonation reaction chamber 18 are led through transfer solenoid valve 34 and transfer pipe 45 through a reservoir lid 46 into the headspace of treated water storage reservoir 48. This gas is vented to atmosphere through an activated carbon air filter cartridge 50, arranged in the reservoir lid 46. Activated filter cartridge 50 can be of the type of granulated activated carbon particles, such as that sold by Ametek, or microporous block activated carbon, such as that sold by KX.

The ozone generator 32 has an air pump 36, connected in series to a cooling element 38 followed by an air-drying column 40, an air flow switch 42 and a corona discharge tube and power supply 44. The cooling element 38 is a thermoelectrically cooled metal block containing a tortuous flow path for air, whose purpose is to remove excess humidity from ambient air and reduce the air temperature to approximately 10°C. The partially dried, cooled air A1 enters air-drying column 40, which is filled with any hygroscopic media known in the art, such as Zeolite Zeochem 4A molecular sieves or silica gel. Air A2 exiting from column 40 has a relative humidity of no more than 5% at a temperature of 20C. A combination humidity and air temperature sensor 43 inputs data on each of these parameters to the micro controller. In the event that the measured values deviate from predetermined values, the micro controller indicates a system fault and disables treatment of water in the ozonation reaction chamber by shutting off power supply 44 and ozonation valve 30.

At the end of the pre-determined ozonation period, the micro controller opens an ozonated water transfer valve 52, which is hydraulically connected between the bottom 19 of ozonation reaction chamber 18 and a constant flow rate pump 54. Activation of pump 54 and opening a reservoir entry valve 60 transfers the water W3 from the ozonation reaction chamber 18 at a constant flow rate through activated carbon filter 56 and activated alumina filter 58. Purified water W4 is transferred through reservoir entry pipe 61 and reservoir lid 46 into treated water reservoir 48. The maximum value of the flow rate of pump 54 is determined by the maximum flow rate allowable to achieve the desired predetermined percentage of reduction of dissolved organic material by filter 56 and reduction of inorganic ions (arsenic or fluoride) by filter 58. It is generally desirable that the filters operate in the range of 80% - 100% reduction, in which the percentage of reduction is defined as 100% x (1 - concentration out/concentration in). The flow rate is typically in the range of 1 -3 liters/min for a cylindrical shaped filter 25cm long and 6 cm in diameter.

The filter 56 is identical in construction to filter 16 described earlier. The activated alumina filter 58 is comprised of a column of activated alumina media, which has been activated prior to use by contacting the filter with a 29 g/L solution of aluminium sulphate for a period of 1 hour. This solution is then flushed out of the filter with pure water prior to installation and use in the apparatus. The physical dimensions of activated alumina filter 58 are dictated by the flow parameters of the re-circulation loop, the pH and concentration of arsenic or fluoride in the source water, and the total volume of water to be treated, e.g. in a system with a recirculation rate of 1 liter/min, treating a total of 500 liters of inlet water W1 containing 50 ppb of total arsenic (combined amount of arsenite and arsenate) at a pH of 6.5, typical cylindrical filter dimensions of 50 cm length and 6 cm diameter are required.

Treated water storage reservoir 48 is provided with a minimum level switch 70, a maximum level switch 72 and an overflow switch 74. An air/ozone bubbler element 62, arranged in the reservoir is connected by reservoir ozonation pipe 63 through lid 46 to a reservoir ozonation valve 64. Valve 64 is hydraulically connected to ozone delivery pipe 31 and thereby to ozone generator 32. At predetermined periods, e.g. typically in the range of 2-24 hours, the micro controller activates the ozone generator 32 and reservoir ozonation valve 64, thereby bubbling the ozone/air mixture into treated water reservoir 48.

A reservoir exit pipe 66 extends through lid 46 closing the treated water reservoir 48, to allow water to be withdrawn from reservoir 48. The reservoir exit pipe 66 is hydraulically connected via a reservoir exit valve 68 and a pipe 69 to the intake of pump 54. Dispense of treated water is made through dispense valve 76 and dispense pipe 75, which is connected to the exit of pump 54. When the user instructs the micro controller to dispense purified water, reservoir exit valves 68 and dispense valve 76 are opened, the pump 54 is activated, and water W5 is dispensed at a spout 78.

To achieve recycling of water from the reservoir 48 through filters 56 and 58, ozonated water transfer valve 52 and dispense valve 76 remain closed. Reservoir entry valve 60 and reservoir exit valve 68, and pump 54 are activated, and retreated water is returned to reservoir 48 through reservoir entry pipe 61. The time for this re-circulation cycle is predetermined by the value set in the micro-controller.

There may different types of recirculation modes depending on the requirements. E.g. as mentioned above, the recirculation for arsenic removal can be 2 hrs continuously, whereas the microbiological treatment may be 8 min every 2hours followed by 8 min of recirculation.

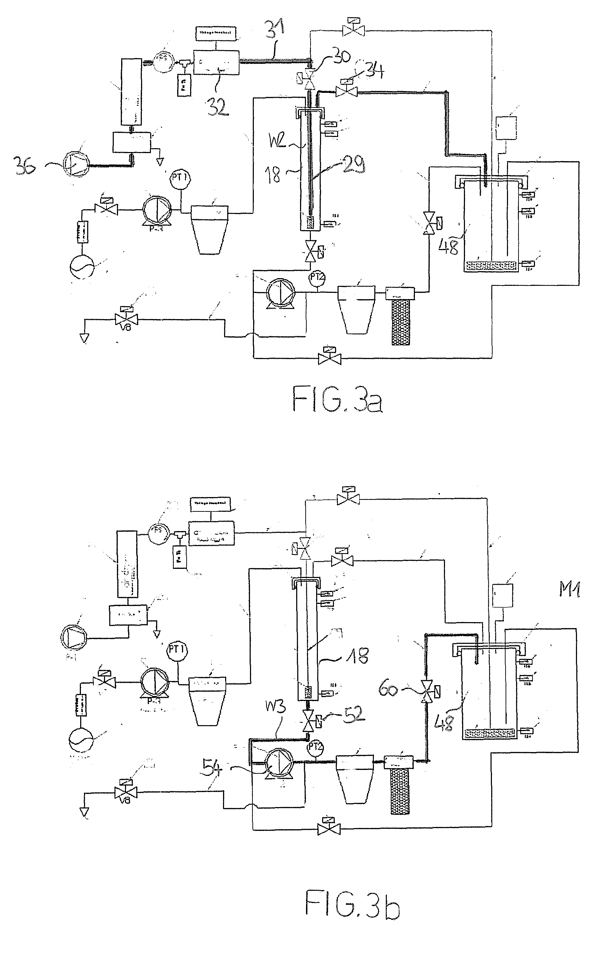

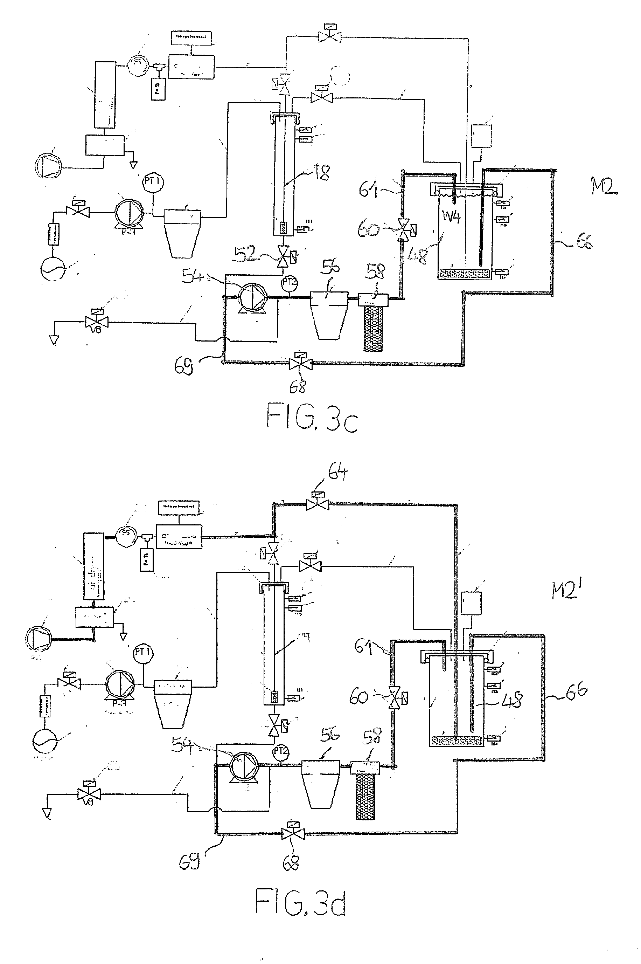

Figures 3a to 3e schematically show different operation modes.

In figure 3a, prefiltered raw water W2 is ozonated in ozonation reaction chamber 18. For this, ozonation valve 30 is open and air pump 36 is operating. Ozone generated by the ozone generator 32 is fed through ozone delivery pipe 31 and ozonation pipe 29 into the ozonation reaction chamber 18. Figure 3a shows the first ozonation batch. Ozone transfer valve 34 is open. All other valves are closed. As this is the initial batch, no water is contained in the storage reservoir 48.

Figure 3b shows transfer of ozone treated water W3 to the storage reservoir 48 in operating mode M1. Ozonated water transfer valve 52 and reservoir entry valve 60 are open and the pump 54 is operating. All other valves are closed.

Figure 3c shows another operating mode M2. In this operating mode, the complete content the ozonation reaction chamber 18 has been transferred to the storage reservoir 48. In order to achieve repeated treatment of the water through the filters 56 and 58, ozonated water transfer valve 52 is closed and reservoir exit valve 68 and reservoir entry valve 60 are open. Pump 54 is operating such that water is re-circulated from the storage reservoir 48 through a re-circulation line including reservoir exit pipe 66 and reservoir entry pipe 61 as well as pipe 69. In this operating mode M2, all other valves are closed. It is, however, possible to ozonate in parallel raw water contained in ozonation reaction chamber 18 in a similar way as shown in figure 3a.

Figure 3d shows an alternative re-circulation operating mode M2'. Reservoir exit valve 68 and reservoir entry valve 60 are opened and pump 54 is operating such that water can circulate. As compared to figure 3c, in addition, reservoir ozone delivery valve 64 is open such that ozone enters the storage reservoir 48. Ozone will be dissolved in water contained in the storage reservoir 48 and will be fed through the re-circulation line including reservoir exit pipe 66, reservoir exit valve 68, pipe 69, pump 54, filters 56 and 58 as well as reservoir entry valve 60 and reservoir entry pipe 61. A new batch of raw water could be ozonated in chamber 18 in parallel.

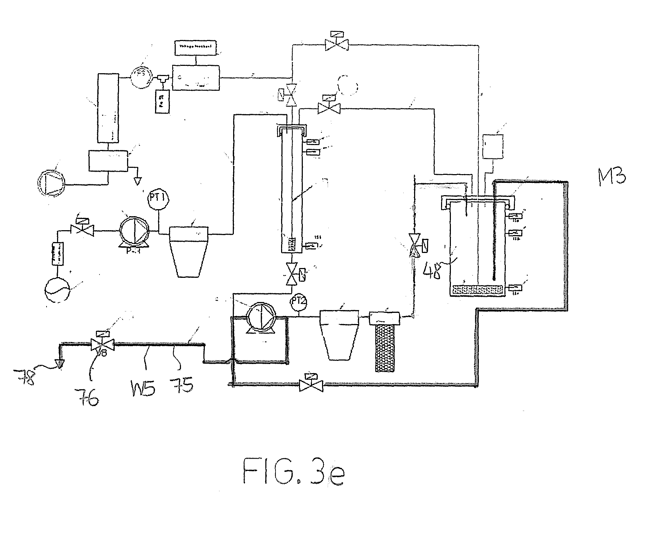

Figure 3e shows dispensing of purified water W5 in another operating mode M3. A new batch could be ozonated in parallel.

## Claims

1. A device (1) for purifying a liquid, in particular water (W1) with an inlet (10) for the untreated liquid (W1) and
with an outlet (78) for the treated liquid (W5),
with at least one ozonation unit (8) and
with at least one filtration unit (58) for removal of pollutants selected from the group consisting of arsenite, arsenate and fluoride compounds,
wherein the ozonation unit (8) is arranged upstream of said filtration unit (58) between said inlet and said outlet.

2. A device according to claim 1 wherein the filtration unit (58) is adapted for removal of at least 80% of pollutants, especially of As(V+) or fluoride in one single pass and a predetermined constant flow rate.

3. A device according to one of the claims 1 and 2, wherein the active media in device filtration unit (58) is activated alumina.

4. A device (1) according to one of the claims 1 to 3, wherein the device (1) is further provided with a storage reservoir (48) arranged downstream of said filtration unit (58) for storing the treated liquid (W4).

5. A device according to claim 4, wherein the device (1) has re-circulation means (68, 54, 60) for re-circulating the treated liquid (W4) from said storage reservoir (48) through said filtration unit (58) and returning to said storage reservoir.

6. A device according to one of the claims 1 to 5, wherein the device (1) is provided with a prefiltration device (56), preferably an activated carbon filter, arranged upstream of said filtration unit (58).

7. A device according to one of the claims 1 to 6, wherein the ozonation unit (8) is designed for batch-wise ozonation of a predetermined quantity of liquid.

8. A device according to one of the claims 5 to 7, wherein the device (1) is provided with means (64, 63) for ozonating said liquid (W4) in said storage reservoir (48) and/or in a re-circulation line (66, 69, 61).

9. A device according to claim 8, wherein the device is provided with one ozone generator (32) connected or connectable both to said ozonation reaction chamber (18) and to said storage reservoir (48).

10. A device according to one of the claims 5 to 9, wherein the device (1) is provided with a pump (54) for feeding said liquid (W3) from said ozonation unit (8) through filtration unit (58) to said storage reservoir (48) preferably at a constant flow rate.

11. A device according to claim 10, wherein said pump (54) is hydraulically connected to said storage reservoir (48) with valve means (60, 68, 52, 76) in such a way that
in a first operating mode (M1) said pump (54) is adapted to feed liquid from said ozonation reaction chamber (18) through the filtration unit (58) to said storage reservoir (48)
in a second operating mode (M2) said pump (54) is adapted to re-circulate liquid in a re-circulation line (66, 69, 61) from said storage reservoir and through said filtration unit (58) with return to said storage reservoir, and
in a third operating mode said pump (54) is adapted to feed purified liquid (W5) from said storage reservoir to a dispensing pipe (78).

12. A method for purifying a liquid, in particular water, comprising the steps of
- ozonating the liquid (W2) in an ozonating unit (8) thereby oxidising pollutants selected from the group of arsenite, ferrous and manganous compounds in the liquid (W2)
- filtering the ozone treated liquid through at least one filtration unit (58) for removing said oxidised pollutants.

13. A method according to claim 12, wherein the purified liquid (W) is stored in a storage reservoir prior to being dispensed for use (W5), and periodically re-circulated from said storage reservoir (48) through said filtration unit (58) and back to said storage reservoir (48).

14. A method according to claim 13, wherein the time interval between said re-circulation periods is dependent on the quantity of purified water (W5) that has been dispensed within a predetermined period of time.

15. A method according to claim 14, wherein the liquid (W4)in said storage reservoir (48) is continuously re-circulated for a predetermined duration or until the amount of pollutants is reduced below a predetermined level.

16. A method according to one of the claims 13 to 15, wherein the ozone treated liquid (W3) is fed through a prefiltration device (56), preferably through an activated carbon filter before being filtered through said filtration unit (58).

17. A method according to one of the claims 13 to 16, wherein a predetermined quantity of liquid is ozone treated in said ozonation unit (8) and wherein the treated quantity of liquid is filtered through at least one filter (58) to a storage reservoir (48) after said treatment.

18. A method according to one of the claims 13 to 17, wherein said liquid (W4) is additionally treated with ozone in said storage reservoir (48).

19. A method according to one of the claims 13 to 18, wherein the liquid (W3) is fed through said filtration unit (58) at a constant flow rate.

20. A method according to one of the claims 14 to 19, wherein
in a first operating mode (M1) liquid (W3) is moved from said ozonation unit (8) through said filtration unit to said storage container (48) by a pump (54)
in a second operation mode (M2) liquid is re-circulated through said filtration unit (58) by said pump (54) and
in a third operation mode (M3) liquid (W5) is dispensed by said pump (54).

21. A method according to one of the claims 14 to 20, wherein during re-circulation, liquid containing dissolved ozone is caused to flow through said filtration unit (58) and/or other parts of said re-circulation line (66, 69, 61).

22. The use of an ozonating device (8) for oxidising pollutants, preferably selected from the group consisting of arsenite, ferrous and manganous compouds prior to removal of said oxidised pollutants in one or more filtration units (56 and 58).
